# EUROPÄISCHE PATENTANMELDUNG

(11) **EP 4 803 287 A1**
(43) Veröffentlichungstag der Anmeldung: **09.09.2026**
(21) Anmeldenummer: 25162420.1
(22) Anmeldetag: 07.03.2025
(51) Int. Cl.: B29C 65/18, B29C 65/30, B29C 65/04, B29C 65/00, B29L 23/24, B29L 23/00

(54) **VERFAHREN ZUM VERSCHWEISSEN VON ZWEI SCHLAUCHENDEN**

(71) Anmelder: Isovolta AG, 2355 Wiener Neudorf (AT)
(72) Erfinder: Pertl, Peter, 8042 Graz (AT); Zechner, Christian, 8962 Gröbming (AT)
(74) Vertreter: Schwarz & Partner Patentanwälte GmbH

(57) **Zusammenfassung**

Die Erfindung betrifft ein Verfahren zum Verschweißen eines ersten Schlauchendes (1) mit einem zweiten Schlauchende (2), wobei das erste Schlauchende (1) und das zweite Schlauchende (2) jeweils eine Wandstärke von maximal 2 mm aufweisen, umfassend die Schritte:
- Bereitstellen eines Schweißwerkzeuges (4) mit zwei Spannbacken, wobei die Breite der beiden Spannbacken zumindest die Hälfte des Außenumfangs des zweiten Schlauchendes (2) beträgt,
- Applizieren einer Schutzschicht (3) auf die Innenseite des ersten Schlauchendes (1),
- Einführen des ersten Schlauchendes (1) in das zweite Schlauchende (2),
- Verbringen der beiden Schlauchenden zwischen die beiden Spannbacken,
- Zusammenpressen der Spannbacken, wobei die Spannbacken die beiden Schlauchenden (1, 2) über die gesamte Breite der Schlauchenden (1, 2) zusammendrücken, sodass die Innenseiten des ersten Schlauchendes (1) über die gesamte Breite nur durch die Schutzschicht (3) getrennt sind.

## Beschreibung

Die Erfindung betrifft ein Verfahren zum Verschweißen eines ersten Schlauchendes mit einem zweiten Schlauchende, wobei das erste Schlauchende und das zweite Schlauchende jeweils eine Wandstärke von maximal 2 mm aufweisen.

Somit betrifft die Erfindung insbesondere das Verschweißen von dünnen Schlauchenden, wie sie beispielsweise bei Fahrradschläuchen eingesetzt werden. Schläuche mit dickeren Wandstärken, wie z.B. Bewässerungsschläuche wie in der US 6,540,859 B1 gezeigt, sind nicht Gegenstand dieser Erfindung.

Die EP 3 600 852 B1 schlägt insbesondere vor, dass das Verschweißen von dünnwandigen Schlauchenden in zwei Schritten durchgeführt wird. Hierbei werden die Spannbacken der Schweißvorrichtung mit einer geringen Breite ausgeführt, um nur einen mittigen Bereich der Schlauchenden zu verschweißen. Um die Schlauchenden um den gesamten Umfang zu verschweißen, wird der Schweißvorgang eingangs mit einem ersten Paar von Spannbacken durchgeführt und danach mit einem zweiten Paar von Spannbacken wiederholt, die in einem Winkel von 90° zu dem ersten Paar von Spannbacken angeordnet sind. Es ist ersichtlich, dass dieses Verfahren zeitaufwändig ist. Weiters kann ein zweistufiger Schweißprozess auch zu ungleichmäßigen Schweißnähten führen, da einige Bereiche nur einfach verschweißt werden, andere hingegen zweifach.

Dieses zweistufige Schweißverfahren wird durchgeführt, um eine Schwächung an den sogenannten Katzenaugen zu vermeiden, d.h. den bei einer Quetschung eines Schlauchens außenliegenden Umschlagpunkten der Schlauchenden. Gemäß vorherrschender Lehre würden diese Katzenaugen nämlich zu undichten Stellen führen, siehe z.B. Abs. [0003] und [0006] der EP 3 600 852 B1.

Ein weiteres Verfahren zum Verbinden von Schlauchenden ist in der US 2,623,571 A beschrieben, wobei die Schlauchenden hierbei eingangs nur gepresst und erst anschließend durch Erhitzen einer Form vulkanisiert werden.

Ausgehend von Stand der Technik ist es somit die Aufgabe, ein Verfahren zum Verschweißen von zwei Schlauchenden mit Wandstärken von bis zu 2 mm weiterzuentwickeln.

Diese Aufgabe wird gelöst durch ein Verfahren zum Verschweißen eines ersten Schlauchendes mit einem zweiten Schlauchende, wobei das erste Schlauchende und das zweite Schlauchende jeweils eine Wandstärke von maximal 2 mm aufweisen, umfassend die Schritte:
- Bereitstellen eines Schweißwerkzeuges mit einer ersten Spannbacke und einer zweiten Spannbacke, wobei die Breite der ersten Spannbacke und der zweiten Spannbacke zumindest die Hälfte des Außenumfangs des zweiten Schlauchendes beträgt
- Applizieren einer Schutzschicht auf die Innenseite des ersten Schlauchendes,
- Einführen des ersten Schlauchendes in das zweite Schlauchende,
- Verbringen des ersten Schlauchendes und des zweiten Schlauchendes zwischen die Spannbacken,
- Zusammenpressen der Spannbacken, wobei die Spannbacken die beiden Schlauchenden über die gesamte Breite der Schlauchenden zusammendrücken, sodass die Innenseiten des ersten Schlauchendes über die gesamte Breite nur durch die Schutzschicht getrennt sind,
wobei die Spannbacken das erste Schlauchende und das zweite Schlauchende während des Zusammenpressens erhitzen, um diese miteinander zu verschweißen.

Überraschenderweise wurde in praktischen Versuchen festgestellt, dass die undichten Stellen an den Umschlagpunkten entgegen der vorherrschenden Lehre nur bei dickwandigen Schlauchenden auftreten. Hingegen ist es bei besonders dünnwandigen Schlauchenden, d.h. mit Wandstärken von bis zu 2 mm, durchaus möglich, diese in einem einzigen Schweißvorgang miteinander zu verschweißen. Hierbei muss jedoch darauf geachtet werden, dass die Spannbacken die beiden Schlauchenden über die gesamte Breite der Schlauchenden zusammendrücken, damit die Schlauchenden auch im Bereich der Umschlagpunkte ausreichend verschweißt werden. In anderen Worten befinden sich die Spannbacken während des Verschweißens unmittelbar über den Umschlagpunkten. Aufgrund der geringen Wandstärke der Schlauchenden ist gewährleistet, dass das erste Schlauchende und das zweite Schlauchende in Bereich der Umschlagpunkte dicht aneinander liegen, wodurch der dichte Schweißvorgang stattfinden kann. Ein übermäßiges Trennen der Schlauchenden im Bereich der Umschlagpunkte findet aufgrund der dünnen Wandstärke der Schlauchenden nicht statt.

Es ist somit vorteilhaft, dass durch die erfindungsgemäße Lösung ein Verfahren bereitgestellt wird, mit dem dünnwandige Schlauchenden in einem einzigen Schritt miteinander verschweißt werden können.

Durch die neuartige Pressung, bei der die Innenseiten des ersten Schlauchendes über die gesamte Breite nur durch die Schutzschicht getrennt sind, kommt es dazu, dass der resultierende Schlauch an den Umschlagpunkten (zumindest ohne die unten beschriebenen Maßnahmen) permanent verformt ist. Dies kann jedoch in Kauf genommen werden, wenn die optische Erscheinungsform weniger relevant ist als die genannten Vorteile.

In einer bevorzugten Variante der Erfindung können die erste Spannbacke und/oder die zweite Spannbacke zwei Seitenwände aufweisen, die in Richtung der Breite der Schlauchenden voneinander beabstandet sind, wobei der Abstand der Seitenwände im Wesentlichen der Hälfte des Außenumfangs des zweiten Schlauchendes entspricht. Die Seitenwände sind dazu vorgesehen, dass die Umschlagpunkte der Schlauchenden bei einer Pressung durch die Spannbacken gegen die Seitenwände gedrückt werden, was dabei hilft, einen noch engeren Kontakt zwischen dem ersten Schlauchende und dem zweiten Schlauchende im Bereich der Umschlagpunkte zu erzielen. Durch die seitliche Begrenzung kann eine noch bessere Ausprägung der Schweißnaht erzielt werden..

In der vorgenannten Variante kann insbesondere vorgesehen werden, dass die erste Spannbacke die Seitenwände aufweist und die zweite Spannbacke eine Breite aufweist, die im Wesentlichen dem Abstand der Seitenwände entspricht. Dadurch kann die zweite Spannbacke zwischen den Seitenwänden geführt werden, was einen besonders vorteilhaften Schweißprozess ermöglicht.

In einer weiteren bevorzugten Ausführungsform können die Spannbacken nach dem Zusammenpressen voneinander entfernt werden, wonach die miteinander verschweißten Schlauchenden um im Wesentlichen 90° gedreht werden, woraufhin die Spannbacken abermals zusammengepresst werden und die Schlauchenden erhitzen, bevorzugt über eine Erweichungstemperatur des Materials des zweiten Schlauchendes. Durch diese Maßnahmen können die zuvor unförmig geformten Umschlagpunkte (die auch als "Schwimmhäute" bezeichnet werden können) wieder "gebügelt" werden, d.h. die Schlauchenden können wieder in eine Form gebracht werden, die mehr einer zylindrischen Form gleicht.

Um den Schweißvorgang durchzuführen, kann zumindest eine, bevorzugt beide Spannbacken eine Elektrode aufweisen, welche zum Erhitzen der Schlauchenden ein Hochfrequenzfeld erzeugen. Bevorzugt bilden somit beide Spannbacken Elektroden aus, welche in Kombination mit dem Werkstück, als Dielektrikum zwischen den Elektroden, einen Kondensator bilden. Diese Elektroden können zusätzlich noch beheizt werden, bzw. für den vorgenannten Bügelschritt auch ausschließlich Heizelemente sein. Alternativ kann der Schweißvorgang auch dadurch umgesetzt werden, dass zumindest eine, bevorzugt beide Spannbacken zum Erhitzen der Schlauchenden ein Widerstandsheizelement aufweisen.

Besonders bevorzugt bestehen die Schlauchenden aus einem thermoplastischen Polymer, da sich dieses besonders gut verformen lässt und dadurch eine Dichtheit an den Umlenkpunkten beim Verschweißen besonders gut gewährleistet ist.

In einem weiteren Aspekt betrifft die Erfindung ein System, umfassend ein Schweißwerkzeug, ein erstes Schlauchende und ein zweites Schlauchende, wobei das erste Schlauchende und das zweite Schlauchende jeweils eine Wandstärke von maximal 2 mm aufweisen, wobei das Schweißwerkzeug eine erste Spannbacke und eine zweite Spannbacke umfasst, wobei die Breite der ersten Spannbacke und der zweiten Spannbacke zumindest die Hälfte des Außenumfangs des zweiten Schlauchendes beträgt, sodass die Spannbacken die beiden Schlauchenden über die gesamte Breite der Schlauchenden zusammendrücken können, wobei zumindest eine der Spannbacken dazu ausgebildet ist, das erste Schlauchende und das zweite Schlauchende während des Zusammenpressens zu erhitzen, um diese miteinander zu verschweißen.

Dieses System hat dieselben Vorteile, die bereits für das Verfahren erläutert wurden. Weiters können dieselben Ausführungsvarianten umgesetzt werden, wie sie für das Verfahren beschrieben wurden.

Im Folgenden werden bevorzugte und nicht einschränkende Ausführungsformen durch Verweis auf die angehängten Zeichnungen erläutert.
Figur 1 zeigt einen Schnitt durch eine Verbindungsstelle von zwei Schlauchenden in einer ersten Ansicht.
Figur 2 zeigt einen Schnitt durch eine Verbindungsstelle von zwei Schlauchenden in einer zweiten Ansicht.

Die Figuren 3a bis 3e zeigen die Schritte zum Verschweißen von zwei Schlauchenden in einem sequenziellen Ablauf in einer ersten Variante.

Die Figuren 4a bis 4e zeigen die Schritte zum Verschweißen von zwei Schlauchenden in einem sequenziellen Ablauf in einer zweiten Variante.
Figur 5 zeigt ein erstes Foto eines Schnitts durch die Schweißstelle, die gemäß der Figuren 4a bis 4e erzeugt wurde.

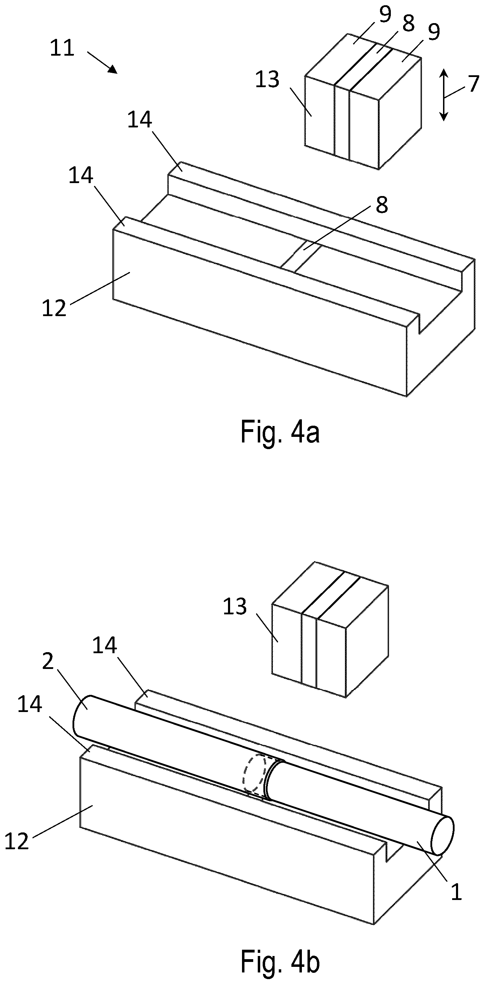

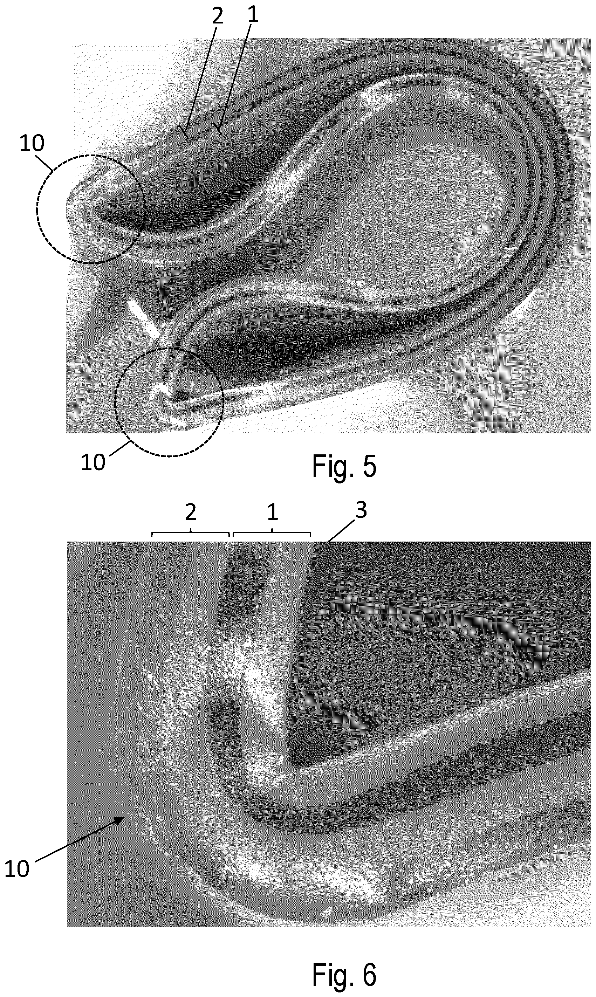

Figur 5 zeigt ein zweites Foto eines Schnitts durch die Schweißstelle, die gemäß der Figuren 4a bis 4e erzeugt wurde.

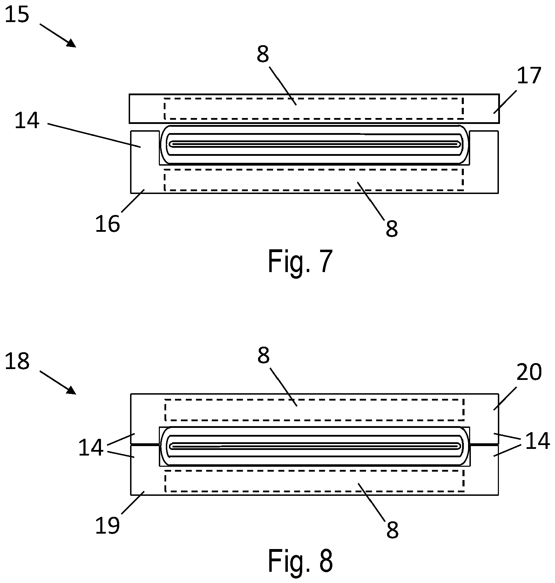

Figur 7 zeigt eine erste alternative Ausgestaltung der Spannbacken mit Seitenwänden.
Figur 8 zeigt eine zweite alternative Ausgestaltung der Spannbacken mit Seitenwänden.

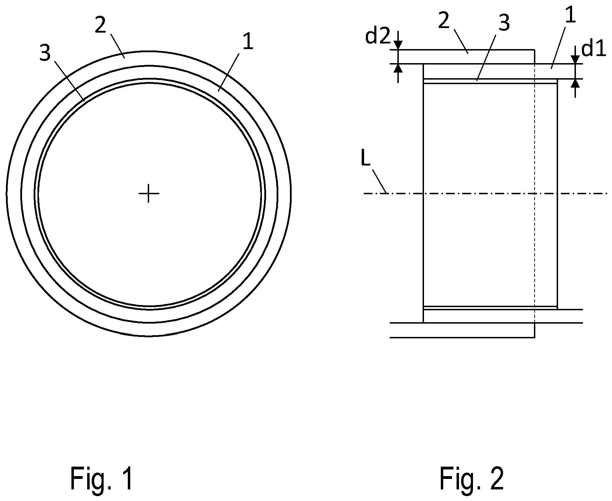

Wie aus den Figuren 1 und 2 ersichtlich ist, sollen mit dem unten beschriebenen Schweißverfahren zwei Schlauchenden 1, 2 miteinander verbunden werden. Insbesondere soll eine umlaufende, dichte Schweißnaht in einem einzigen Verfahrensschritt hergestellt werden. Es ist ersichtlich, dass die Schlauchenden 1, 2 eine Längsachse L definieren. Wenn hierin von einer "Länge" gesprochen wird, bezieht sich dies auf eine Richtungsangabe parallel zur Längsachse L. Wenn hierin von einer "Breite" oder "Höhe" gesprochen wird, bezieht sich dies auf eine Richtungsangabe normal zur Längsachse L.

Die beiden Schlauchenden 1, 2 können die beiden Enden eines einzigen Schlauchs sein, sodass sich nach dem Verschweißen der Schlauchenden 1, 2 ein im Wesentlichen ringförmiger Schlauch ergibt. Alternativ können die Schlauchenden 1, 2 auch jeweils einem anderen Schlauch zugehörig sein.

Um die Schlauchenden 1, 2 miteinander zu verbinden, wird ein Schlauchende 1 in das andere Schlauchende 2 eingeführt. Somit liegt ein inneres Schlauchende 1 vor, das auch als erstes Schlauchende 1 bezeichnet wird, und ein äußeres Schlauchende 2, das als zweites Schlauchende 2 bezeichnet wird. Der Bereich, an dem das innere Schlauchende 1 innerhalb des äußeren Schlauchendes 2 vorliegt, wird hierin als Verbindungsstelle bezeichnet, die beispielsweise eine Länge von 0,5 cm bis 2 cm aufweisen kann. Von diesen Längen kann jedoch auch abgewichen werden.

Im vorliegenden Verfahren sind die Schlauchenden 1, 2 derart gewählt, dass diese jeweils eine Dicke d1, d2 (d.h. eine Wandstärke) von bis zu 2 mm, bis zu 1 mm oder bis zu 0,5 mm aufweisen. Dadurch sind sie flexibel genug, damit sie bei einem Zusammenpressen der Verbindungsstelle weiterhin dicht aneinanderlegen. Aus demselben Grund bestehen die Schlauchenden 1, 2 bevorzugt aus einem thermoplastischen Polymer. Bevorzugt bestehen die Schlauchenden 1, 2 nicht aus PVC, wie bei Gartenschläuchen. Die Schlauchendenden 1, 2 können denselben oder unterschiedliche Innendurchmesser und Außendurchmesser aufweisen. Wenn die Schlauchendenden 1, 2 denselben Innendurchmesser und Außendurchmesser aufweisen, kann das erste Schlauchende 1 aufgrund der Flexibilität der beiden Schlauchenden 1, 2 weiterhin in das zweite Schlauchende 2 eingeführt werden.

Aus den Figuren 1 und 2 ist weiters ersichtlich, dass auf der Innenseite des inneren Schlauchendes 1 eine Schutzschicht 3 vorgesehen ist. Die Schutzschicht 3 befindet sich zumindest in jenem Bereich, in dem die beiden Schlauchenden 1, 2 miteinander verschweißt werden. In der Regel wird die Schutzschicht 3 um den gesamten Innenumfang des ersten Schlauchendes 1 aufgetragen, jedoch wäre es theoretisch möglich, auch nur eine Hälfte des Innenumfangs des ersten Schlauchendes 3 mit der Schutzschicht 3 zu versehen, damit die Innenseiten des ersten Schlauchendes 3 beim Zusammenquetschen des ersten Schlauchendes 1 von der Schutzschicht 3 beabstandet sind.

Die Schutzschicht 3 ist beispielsweise ein hitzebeständiger Klarlack oder auch ein anderes Medium, das ein Verbinden der gegenüberliegenden Innenseiten des ersten Schlauchendes 3 beim Zusammenquetschen des ersten Schlauchendes 1 verhindert. Die Schutzschicht 3 kann beispielsweise mit einer Dicke von 1 µm bis 20µm, bevorzugt 3 µm bis 10µm aufgetragen werden. Es versteht sich, dass von diesen Werten auch abgewichen werden kann.

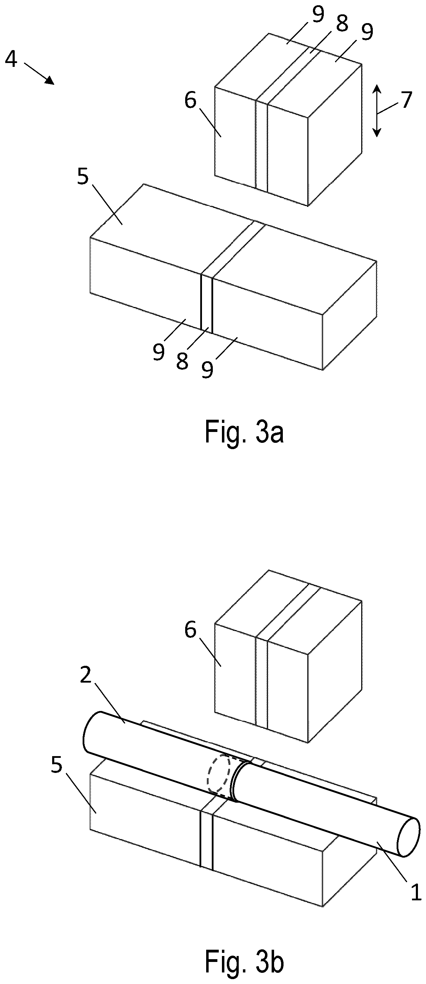

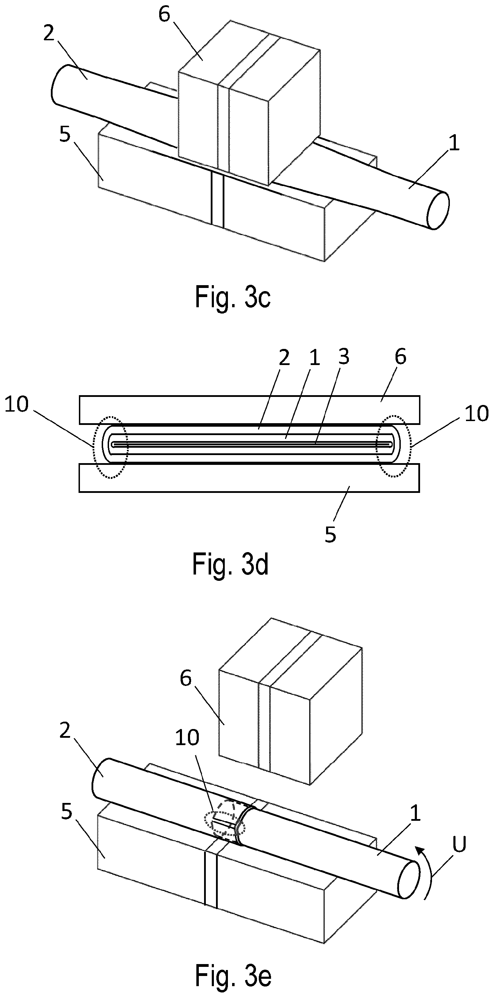

Um die beiden Schlauchenden 1, 2 miteinander zu verschweißen, wird wie in Figur 3a dargestellt ein Schweißwerkzeug 4 mit zwei Spannbacken 5, 6 bereitgestellt. Die Spannbacken 5, 6 sind derart breit ausgeführt, dass die beiden Schlauchenden 1, 2 über die gesamte Breite zwischen den Spannbacken 5, 6 zu liegen kommen, wenn die Spannbacken 5, 6 zusammengepresst werden. In anderen Worten weisen die Spannbacken 5, 6 eine Breite auf, die mindestens so groß ist wie die Hälfte des Außenumfangs des zweiten Schlauchendes 2. Dies wird unten im Zusammenhang mit Figur 3d in mehr Detail erläutert.

Aus Figur 3a ist ersichtlich, dass eine der beiden Spannbacken 5 statisch vorgesehen ist, wobei diese statische Spannbacke auch als erste Spannbacke 5 bezeichnet wird. Die andere Spannbacke 6 ist beweglich ausgeführt, wie durch das Bezugszeichen 7 angedeutet wird, wobei diese bewegliche Spannbacke 6 auch als zweite Spannbacke 6 bezeichnet wird. Alternativ könnten auch beide Spannbacken 5, 6 beweglich ausgeführt sein. Um die zweite Spannbacke 6 zu bewegen, kann diese durch einen Linearantrieb geführt werden oder auf einem Hebel gelagert sein, der um eine Hebelachse verschwenkbar ist. Es versteht sich, dass die Art der Bewegung auch anders ausgeführt sein kann.

Weiters ist ersichtlich, dass beide Spannbacken 5, 6 Mittel 8 umfassen, die dazu ausgebildet sind, das erste Schlauchende 1 und das zweite Schlauchende 2 zu erhitzen, wenn diese wie in den Figuren 3c und 3d zwischen den Spannbacken 5, 6 zusammengequetscht sind. Diese Mittel 8 können beispielsweise durch Elektroden gebildet sein, die ein Hochfrequenzfeld erzeugen, oder durch ein Widerstandsheizelement. Die Mittel 8 können in Richtung der Länge kürzer als die Verbindungsstelle oder gleich lang wie diese ausgeführt sein. Beidseitig der Mittel 8 können die Spannbacken optional Isolationsmittel 9 aufweisen, d.h. die Isolationsmittel 9 sind in Richtung der Länge durch die Mittel 8 beabstandet. Die Isolationsmittel 9 können beispielsweise aus Kunststoff oder Keramik gefertigt sein und dadurch die Isolationswirkung erzielen.

Es versteht sich jedoch, dass das Schweißwerkzeug 3 auch anders ausgeführt werden könnte, z.B. indem nur eine der beiden Spannbacken 5, 6 die genannten Mittel 8 umfasst.

Um das Schweißverfahren auszuführen, wird eingangs das Schweißwerkzeug 3 bereitgestellt, siehe Figur 3a.

Weiters wird die Schutzschicht 3 auf die Innenseite des ersten Schlauchendes 1 appliziert und das erste Schlauchende 1 wird in das zweite Schlauchende 2 eingeführt, um die noch unverschweißte Verbindungsstelle herzustellen.

Danach werden das erste Schlauchende 1 und das zweite Schlauchende 2, genauer die Verbindungsstelle des ersten Schlauchendes 1 und des zweiten Schlauchendes 2, zwischen die Spannbacken 5, 6 gelegt, siehe Figur 3b. Beispielsweise wird die Verbindungsstelle auf die statische erste Spannbacke 5 gelegt. Bezüglich der Breite der Spannbacken 5, 6 wird die Verbindungsstelle etwa mittig zwischen die Spannbacken 5, 6 gelegt.

Danach werden die beiden Spannbacken 5, 6 zusammengedrückt, bis sich im Bereich der Spannbacken 5, 6 keine Luft mehr innerhalb des ersten Schlauchendes 1 befindet, siehe die Figuren 3c und 3d. Insbesondere aus Figur 3d ist ersichtlich, dass die Spannbacken 5, 6 derart breit sind, dass sie die beiden Schlauchenden 1, 2 über die gesamte Breite der Schlauchenden 1, 2 zusammendrücken. In der Folge sind die Innenseiten des ersten Schlauchendes 1 über die gesamte Breite nur durch die Schutzschicht 3 getrennt sind. Ein besonderes Augenmerk soll auf die Umschlagpunkte der beiden Schlauchenden 1, 2 gerichtet werden, die in Figur 3d durch die Bezugszeichen 10 dargestellt sind. Es ist ersichtlich, dass die Umschlagpunkte 10 vollständig zusammengedrückt sind. Aufgrund der Dünne der Schlauchenden 1, 2 liegen diese an den Umschlagpunkten 10 in Richtung der Breite jedoch weiterhin eng aneinander an und es liegt kein Lufteinschluss vor.

Während die Spannbacken 5, 6 wie beschrieben zusammengepresst sind, erhitzen die genannten Mittel 8 der Spannbacken 5, 6 die beiden Schlauchenden 1, 2, um diese miteinander zu verschweißen. Die Spannbacken 5, 6 bzw. die Mittel 8 können die Schlauchenden 1, 2 unmittelbar über den Umschlagpunkten 10 erhitzen, um die Schlauchenden 1, 2 auch in diesen Bereichen miteinander zu verschweißen. Nachdem die beiden Schlauchenden 1, 2 miteinander verschweißt wurden, kann die bewegliche Spannbacke 6 wieder angehoben werden, sodass sich die Schlauchenden 1, 2 wieder in einem gewissen Maß zurückverformen werden, wie in Figur 3e dargestellt ist. Aus Figur 3e ist jedoch insbesondere auch ersichtlich, dass an den Umschlagpunkten 10 eine Verformung entstanden ist, die wie eine längliche Beule aussieht. Somit haben die Schlauchenden 1, 2 an der Verbindungsstelle keine vollständig zylindrische Form mehr.

Um die genannte Verformung auszugleichen, kann die Verbindungsstelle "ausgebügelt" werden, indem die Schlauchenden 1, 2 bzw. die Verbindungsstelle um 90° um die Längsachse L gedreht wird, was in Figur 3e durch das Bezugszeichen U angedeutet ist, sodass sich die Verformungen nun unmittelbar an einer der beiden Spannbacken 5, 6 befinden. Danach können die Spannbacken 5, 6 zusammengepresst werden, sodass die Verformungen im Wesentlichen mittig bezüglich der Breite zwischen diesen eingequetscht sind. Die Mittel 8 bringen die Schlauchenden 1, 2 auf eine Temperatur, die über der Erweichungstemperatur des zweiten Schlauchendes 2 bzw. des ersten und zweiten Schlauchendes 1, 2 liegt, wodurch sich die Verformungen zumindest teilweise wieder zurückverformen. Es sei festgehalten, dass es sich bei diesem Zweiten Erhitzungsvorgang um keinen Schweißvorgang handelt, da die beiden Schlauchenden 1, 2 bereits vollständig miteinander verschweißt sind.

Die Figuren 4a bis 4e zeigen das Verfahren der Figuren 3a bis 3e mit einem abgewandelten Schweißwerkzeug 11. Sofern nicht ausdrücklich anders angegeben wird, werden beim Verfahren der Figuren 4a bis 4e die gleichen Maßnahmen wie beim Verfahren der Figuren 3a bis 3e eingesetzt, sodass auch gleiche Bezugszeichen verwendet werden.

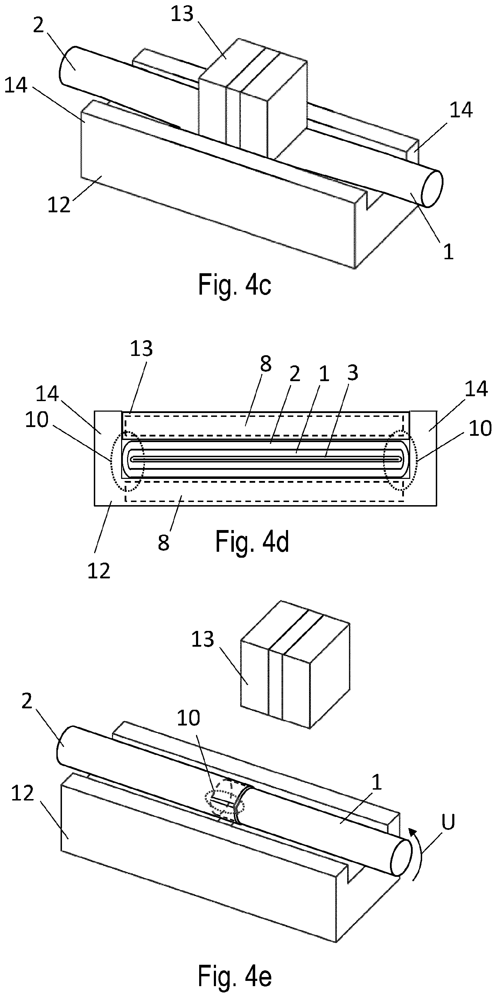

Beim Schweißwerkzeug 11 wird eine erste Spannbacke 12 und ein zweite Spannbacke 13 eingesetzt. Die erste Spannbacke 12 weist zwei Seitenwände 14 auf, zwischen denen die Schlauchenden 1, 2 im zusammengesetzten Zustand passgenau aufgenommen werden können. Weiters kann auch die zweite Spannbacke 13 passgenau zwischen den Seitenwänden 14 aufgenommen werden, d.h. der Abstand der Seitenwände 14 entspricht der Breite der zweiten Spannbacke 13, wie insbesondere auch aus Figur 4d zu entnehmen ist. Die zweite Spannbacke 13 kann im Übrigen gleich wie in den Figuren 3a bis 3e ausgeführt sein. In der Regel ist die erste Spannbacke 12 statisch und die zweite Spannbacke 13 beweglich, wobei dies jedoch nicht zwingend ist.

Gemäß Figur 4a weist die erste Spannbacke 12 auch die genannten Mittel 8 auf, beispielsweise in einem Bereich zwischen den Seitenwänden 14. In dieser Variante weisen sowohl die erste Spannbacke 12 als auch die zweite Spannbacke 13 die genannten Mittel 8 auf, wobei die Mittel 8 Elektroden zum Hochfrequenzschweißen sind. In dieser Variante muss jedenfalls darauf geachtet werden, dass die Seitenwände 14 keine leitfähige Verbindung zwischen den Elektroden bilden, um einen Kurzschluss zu verhindern. Es ist daher bevorzugt, dass die Seitenwände 14 Isolationselemente sind, welche die Elektroden der Spannbacken 12, 13 beabstanden. Beispielsweise können die Seitenwände 14 vollständig aus Kunststoff oder Keramik gefertigt sein.

Wenn die Mittel 9 durch Widerstandsheizelemente gebildet sind, können die Mittel 8 jedoch auch an den Seitenwänden 14 vorliegen, damit diese die Umschlagpunkte 10 auch von der Seite erhitzen können, wobei die Seitenwände 14 in diesem Fall z. In dieser Variante könnte die erste Spannbacke 12 oder auch die zweite Spannbacke 13 keine Mittel 8 umfassen.

Zum Verschweißen wird eingangs wieder wie in Figur 4a das Schweißwerkzeug 11 bereitgestellt. Danach wird die Schutzschicht 3 auf die Innenseite des ersten Schlauchendes 1 appliziert und das erste Schlauchende 1 wird in das zweite Schlauchende 2 eingeführt, um die noch unverschweißte Verbindungsstelle herzustellen. Danach werden das erste Schlauchende 1 und das zweite Schlauchende 2, genauer die Verbindungsstelle des ersten Schlauchendes 1 und des zweiten Schlauchendes 2, zwischen die Spannbacken 12, 13 gelegt, siehe Figur 4b. Beispielsweise wird die Verbindungsstelle auf die statische erste Spannbacke 12 gelegt. Bezüglich der Breite der Spannbacken 12, 13 wird die Verbindungsstelle etwa mittig zwischen die Spannbacken 12, 13 gelegt.

Danach werden die beiden Spannbacken 12, 13 zusammengedrückt, bis sich im Bereich der Spannbacken 12, 13 keine Luft mehr innerhalb des ersten Schlauchendes 1 befindet, siehe die Figuren 4c und 4d. Es wird auf die Ausführungen zu den Figuren 3c und 3d verwiesen.

Besonders ist in den Figuren 4c und 4d, dass die Seitenwände 14 ein Ausdehnen des zweiten Schlauchendes 2 nach außen unterbindet, wodurch die Schlauchenden 1, 2 an der Verbindungsstelle nicht nur von oben und unten durch die Spannbacken 12, 13 eingequetscht werden, sondern auch seitlich durch die Seitenwände 14 gequetscht werden. Damit dies im gewünschten Umfang funktioniert, wird der Abstand zwischen den Seitenwänden 14 entsprechend dimensioniert, z.B. indem der Abstand zwischen den Seitenwänden 14 mit der Hälfte des Außenumfangs des zweiten Schlauchendes 2 (in einem Ruhezustand oder in einem Zustand, in dem das erste Schlauchende 1 in das zweite Schlauchende 2 eingeführt ist) gewählt wird. Die Wahl des genauen Abstands kann durch den Fachmann entsprechend gewählt werden, um eine stärkere oder schwächere seitliche Quetschung herbeizuführen, beispielsweise in einem Rahmen von +/- 5% oder +/- 2% der Hälfte des Außenumfangs des zweiten Schlauchendes 2 in einem der genannten Zustände.

Der Abstand der Seitenwände 14 (und die optional auch die Breite der zweiten Spannbacke 13) kann bevorzugt auch verstellbar ausgeführt sein, um die erste Spannbacke 12 an verschiedene zu verschweißende Schläuche anzupassen oder um die Stärke der seitlichen Quetschung einzustellen.

Während die Spannbacken 12, 13 wie beschrieben zusammengepresst sind, erhitzen die Mittel 8 der Spannbacken 12, 13 die beiden Schlauchenden 1, 2, um diese miteinander zu verschweißen. Die Spannbacken 12, 13 bzw. die Mittel 8 können die Schlauchenden 1, 2 unmittelbar über den Umschlagpunkten 10 erhitzen, um die Schlauchenden 1, 2 auch in diesen Bereichen miteinander zu verschweißen.

Nachdem die beiden Schlauchenden 1, 2 miteinander verschweißt wurden, kann die bewegliche Spannbacke 13 wieder angehoben werden, sodass sich die Schlauchenden 1, 2 wieder in einem gewissen Maß zurückverformen werden, wie in Figur 4e dargestellt ist. Aus Figur 4e ist ersichtlich, dass auch mit diesem Schweißverfahren eine Verformung an den Umschlagpunkten 10 entstehen wird. Diese kann optional wie bereits beschrieben "ausgebügelt" werden, indem die Schlauchenden 1, 2 bzw. die Verbindungsstelle um 90° um die Längsachse L gedreht wird und die Spannbacken 12, 13 abermals zusammengepresst werden und die Schlauchenden 1, 2 erhitzen.

Die Figuren 5 und 6 zeigen jeweils ein Foto, wobei eine Schweißverbindung zwischen zwei Schlauchenden 1, 2 gemäß der Figuren 4a bis 4e hergestellt wurde und danach in Bereich der Schweißverbindung normal zur Längsachse L geschnitten wurde. Hervorzuheben ist, dass die Schlauchenden 1, 2 jeweils zweilagig sind, sodass an der Verbindungsstelle der beiden Schlauchenden 1, 2 insgesamt vier Lagen ersichtlich sind. Dies ist jedoch zur Erzielung des Effekts unerheblich, d.h. die Schlauchenden 1, 2 können einlagig oder mehrlagig sein. Aus den Fotos ist erkenntlich, dass hier die beiden Schlauchenden 1, 2 bereits nach einem einzigen Schweißschritt komplett miteinander verbunden sind und es keine Lufteinschlüsse im Bereich der Umlenkpunkte 10 gibt. Auf das in Bezug mit Figur 3e erläuterte "Bügeln" der Verformungen wurde für die dargestellten Muster der Figuren 5 und 6 bewusst verzichtet.

Figur 7 zeigt eine Abwandlung des Schweißwerkzeugs 15, bei dem im Vergleich zum Schweißwerkzeug 11 die Seitenwände 14 der ersten Spannbacke 16 eine geringere Höhe aufweisen, aber im Wesentlichen den gleichen Abstand wie beim Schweißwerkzeug 11 der Figur 4a einnehmen, um die seitliche Quetschung der Schlauchenden 1, 2 zu erzielen. Die Höhe der Seitenwände 14 ist derart gewählt, dass diese geringer oder gleich hoch ist wie die beiden Schlauchenden 1, 2 im vollständig gequetschten Zustand. Dadurch kann eine zweite Spannbacke 17, die breiter ist als der Abstand der Seitenwände 14, auf die Oberseite der Seitenwände 14 gepresst werden.

Figur 8 zeigt eine weitere Abwandlung des Schweißwerkzeugs 16, bei dem beide Spannbacken 19, 20 Seitenwände 14 aufweisen, die im Wesentlichen denselben Abstand aufweisen, welcher wie bezüglich der Figuren 4c und 4d erläutert gewählt werden kann. Die Höhe der Seitenwände 14 ist derart gewählt, dass sie zusammen eine geringere Höhe oder eine gleiche Höhe wie die beiden Schlauchenden 1, 2 im vollständig gequetschten Zustand aufweisen.

In den Varianten der Figuren 7 und 8 sind die Mittel 8 wiederum durch Elektroden zum Hochfrequenzschweißen gebildet. Es ist ersichtlich, dass die Mittel 8 jeweils durch die Seitenwände 14 beabstandet sind, wobei die Seitenwände wieder als Isolationselemente ausgeführt sind. In anderen Worten bilden die Seitenwände 14 keine leitfähige Verbindung zwischen den Elektroden, um einen Kurzschluss zu verhindern. Auch in diesen Beispielen können die Seitenwände 14 vollständig aus Kunststoff oder Keramik gefertigt sein.

Es ist weiters ersichtlich, dass die Elektroden nur über jene Breite der Spannbacken verlaufen, die zur Aufnahme der Schlauchenden 1, 2 verlaufen. Es könnte jedoch auch vorgesehen werden, dass die Elektroden über die gesamte Breite der Spannbacken verlaufen.

Es versteht sich jedoch, dass die Mittel 8 in den Varianten der Figuren 7 und 8 auch durch Widerstandsheizelemente gebildet sein könnten und in diesem Fall optional auch in den Seitenwänden 14 vorgesehen sein könnten.

Für alle vorgenannten Ausführungsformen sei weiters angemerkt, dass sowohl Elektroden als auch ein Widerstandselement in zumindest einer der Spannbacken vorgesehen sein könnten.

## Patentansprüche

1. Verfahren zum Verschweißen eines ersten Schlauchendes (1) mit einem zweiten Schlauchende (2), wobei das erste Schlauchende (1) und das zweite Schlauchende (2) jeweils eine Wandstärke von maximal 2 mm aufweisen, umfassend die Schritte:
- Bereitstellen eines Schweißwerkzeuges (4, 11, 15, 18) mit einer ersten Spannbacke (5, 12, 16, 19) und einer zweiten Spannbacke (6, 13, 17, 20), wobei die Breite der ersten Spannbacke (5, 12, 16, 19) und der zweiten Spannbacke (6, 13, 17, 20) zumindest die Hälfte des Außenumfangs des zweiten Schlauchendes (2) beträgt,
- Applizieren einer Schutzschicht (3) auf die Innenseite des ersten Schlauchendes (1),
- Einführen des ersten Schlauchendes (1) in das zweite Schlauchende (2),
- Verbringen des ersten Schlauchendes (1) und des zweiten Schlauchendes (2) zwischen die erste Spannbacke (5, 12, 16, 19) und die zweite Spannbacke (6, 13, 17, 20),
- Zusammenpressen der ersten Spannbacke (5, 12, 16, 19) und der zweiten Spannbacke (6, 13, 17, 20), wobei die erste Spannbacke (5, 12, 16, 19) und die zweite Spannbacke (6, 13, 17, 20) die beiden Schlauchenden (1, 2) über die gesamte Breite der Schlauchenden (1, 2) zusammendrücken, sodass die Innenseiten des ersten Schlauchendes (1) über die gesamte Breite nur durch die Schutzschicht (3) getrennt sind,
wobei die erste Spannbacke (5, 12, 16, 19) und/oder die zweite Spannbacke (6, 13, 17, 20) das erste Schlauchende (1) und das zweite Schlauchende (2) während des Zusammenpressens erhitzt, um diese miteinander zu verschweißen.

2. Verfahren nach Anspruch 1, wobei die erste Spannbacke (12, 16, 19) und/oder die zweite Spannbacke (20) zwei Seitenwände (14) aufweist, die in Richtung der Breite der Schlauchenden (1, 2) voneinander beabstandet sind, wobei der Abstand der Seitenwände (14) im Wesentlichen der Hälfte des Außenumfangs des zweiten Schlauchendes (2) entspricht, wobei die Seitenwände (14) bevorzugt Isolationselemente sind und besonders bevorzugt vollständig aus Kunststoff oder Keramik bestehen.

3. Verfahren nach Anspruch 2, wobei die erste Spannbacke (13) die Seitenwände (14) aufweist und die zweite Spannbacke (6) eine Breite aufweist, die im Wesentlichen dem Abstand der Seitenwände entspricht.

4. Verfahren nach einem der vorherstehenden Ansprüche, wobei die Spannbacken (5, 12, 16, 19; 6, 13, 17, 20) nach dem Zusammenpressen voneinander entfernt werden, wonach die miteinander verschweißten Schlauchenden (1, 2) um im Wesentlichen 90° gedreht werden, woraufhin die Spannbacken (5, 12, 16, 19; 6, 13, 17, 20) abermals zusammengepresst werden und die Schlauchenden (1, 2) erhitzen, bevorzugt über eine Erweichungstemperatur des Materials des zweiten Schlauchendes (2).

5. Verfahren nach einem der vorherstehenden Ansprüche, wobei zumindest eine, bevorzugt beide Spannbacken (5, 12, 16, 19; 6, 12, 17, 20) eine Elektrode aufweisen, welche zum Erhitzen der Schlauchenden (1, 2) ein Hochfrequenzfeld erzeugen.

6. Verfahren nach einem der vorherstehenden Ansprüche, wobei zumindest eine, bevorzugt beide Spannbacken (5, 12, 16, 19; 6, 13, 17, 20) ein Widerstandsheizelement aufweisen.

7. Verfahren nach einem der vorherstehenden Ansprüche, wobei die Schlauchenden (1, 2) aus einem thermoplastischen Polymer bestehen.

8. System, umfassend ein Schweißwerkzeug (4, 11, 15, 18), ein erstes Schlauchende (1) und ein zweites Schlauchende (2), wobei das erste Schlauchende (1) und das zweite Schlauchende (2) jeweils eine Wandstärke von maximal 2 mm aufweisen, wobei das Schweißwerkzeug (4, 11, 15, 18) eine erste Spannbacke (5, 12, 16, 19) und eine zweite Spannbacke (6, 12, 17, 20) umfasst, wobei die Breite der ersten Spannbacke (5, 11, 16, 19) und der zweiten Spannbacke (6, 12, 17, 20) zumindest die Hälfte des Außenumfangs des zweiten Schlauchendes (2) beträgt, sodass die Spannbacken (5, 11, 16, 19; 6, 12, 17, 20) die beiden Schlauchenden (1, 2) über die gesamte Breite der Schlauchenden (1, 2) zusammendrücken können, wobei zumindest eine der Spannbacken (5, 11, 16, 19; 6, 12, 17, 20) dazu ausgebildet ist, das erste Schlauchende (1) und das zweite Schlauchende (2) während des Zusammenpressens zu erhitzen, um diese miteinander zu verschweißen.

9. System nach Anspruch 8, wobei die erste Spannbacke (12, 16, 19) und/oder die zweite Spannbacke (20) zwei Seitenwände (14) aufweist, die in Richtung der Breite der Schlauchenden (1, 2) voneinander beabstandet sind, wobei der Abstand der Seitenwände (14) im Wesentlichen der Hälfte des Außenumfangs des zweiten Schlauchendes (2) entspricht.

10. System nach Anspruch 9, wobei die erste Spannbacke (5) die Seitenwände (14) aufweist und die zweite Spannbacke (6) eine Breite aufweist, die im Wesentlichen dem Abstand der Seitenwände (14) entspricht.

11. System nach einem der Ansprüche 8 bis 10, wobei zumindest eine, bevorzugt beide Spannbacken (5, 11, 16, 19; 6, 12, 17, 20) eine Elektrode aufweisen, welche zum Erhitzen der Schlauchenden ein Hochfrequenzfeld erzeugen.

12. System nach einem der Ansprüche 8 bis 11, wobei zumindest eine, bevorzugt beide Spannbacken (5, 11, 16, 19; 6, 12, 17, 20) ein Widerstandsheizelement aufweisen.

13. System nach einem der Ansprüche 8 bis 12, wobei die Schlauchenden (1, 2) aus einem thermoplastischen Polymer bestehen.
